(19) Europäisches Patentamt
European Patent Office
Office européen des brevets

(11) EP 1 755 067 A1

(12) EUROPEAN PATENT APPLICATION

(43) Date of publication:
21.02.2007 Bulletin 2007/08

(51) Int Cl.:
G06K 9/68 (2006.01)    G06F 17/30 (2006.01)

(21) Application number: 05255032.4

(22) Date of filing: 15.08.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicants:
• Mitsubishi Electric Information Technology
Centre
Europe B.V.
Guildford,
Surrey GU2 5YD (GB)
Designated Contracting States:
GB
• MITSUBISHI DENKI KABUSHIKI KAISHA
Chiyoda-ku
Tokyo 100-8310 (JP)
Designated Contracting States:
AT BE BG CH CY CZ DE DK EE ES FI FR GR HU
IE IS IT LI LT LU LV MC NL PL PT RO SE SI SK TR

(72) Inventors:
• Bober, Miroslaw
Guildford, Surrey GU1 2SE (GB)
• O'Callaghan, Robert J.
Guildford, Surrey GU2 4LD (GB)

(74) Representative: Whitlock, Holly Elizabeth Ann et al
R G C Jenkins & Co,
26 Caxton Street
London SW1H 0RJ (GB)

(54) **Mutual-rank similarity-space for navigating, visualising and clustering in image databases**

(57) A method of representing a group of data items comprises, for each of a plurality of data items in the group, determining the similarity between said data item and each of a plurality of other data items in the group, assigning a rank to each pair on the basis of similarity, wherein the ranked similarity values for each of said plurality of data items are associated to reflect the overall relative similarities of data items in the group.

Fig. 4

EP 1 755 067 A1

**Description**

The invention relates to the efficient representation of data items, especially image collections. It relates especially to navigating in image collections from which mathematical descriptions of the image contents can be extracted, since in such databases it is possible to use automated algorithms to analyse, organise, search and browse the data. Digital image collections are becoming increasingly common in both the professional and consumer arenas. Technological advances have made it cheaper and easier than ever to capture, store and transmit digital imagery. This has created a need for new methods to enable users to interact effectively with such collections.

For the novice user, in particular, it is difficult to find an intuitive way to relate to such large volumes of data. Most consumers, for example, are familiar with physically organising their paper photographic prints into albums, but this tangible interaction is no longer possible with a collection of digital photographs in the memory of their personal computer, camera phone or digital camera. Initially, electronic methods for navigating collections have focused on simulating this physical, tangible archiving experience.

Wang et al (US6,028,603) provide a means to present images in a photo-album like format, consisting of one or more pages with information defining a layout of images on that page. The order and layout may be changed by drag and drop operations by the user.

Another simple method comes from Gargi (US 2002/0140746), who presents images in an overlapped stack display. Images are revealed on mouse-over. For the user, this is similar to picking from a pile of photographs on a table.

When users organise their image collections manually, there is usually some significance to the structure. In other words, the layout of their photo-album has some "meaning" for them. This may relate to the events, people or emotions associated with the images or may, for example, tell a story. Some electronic navigation tools have tried to emulate and make use of this structure by allowing users to label or group images. Some even try to make automatic suggestions for categories or groupings.

Mojsilovic et al. (US 2003/0123737) disclose a method for browsing, searching, querying and visualising collections of digital images, based on semantic features derived from perceptual experiments. They define a measure for comparing the semantic similarity of two images based on this "complete feature set" and also a method to assign a semantic category to each image.

Rosenzweig et al. (US 2002/0075322) propose a timeline-based Graphical User Interface (GUI), for browsing and retrieval, in which groups of images are represented by icons sized proportionately to the size of the groups. Their hierarchical system operates by the user activating an icon, which triggers a further level, refining the first one. Various metadata stored in an image file, identifying, e.g. location, persons, events may also be decoded by the system to derive the (mutually exclusive) groups. Activating icons in the final level /view displays the contained images

Stavely et al. (US 2003/0086012) describe another user interface for image browsing. Using simple combinations of vertical and horizontal input controls, they permit browsing of images within groups and between groups by having a "preferred" image for each group.

Anderson (US 6,538,698) details a system for search and browse, relying on sorting and grouping the images by various category criteria.

While a digital library denies the user the physical interaction that photographic prints allow, it also enables useful new functions, particularly concerning the automated analysis of content. "Features" can be extracted that characterise the images in a number of ways. The shapes, textures and colours (for example) present in the image may all be described by numerical features, allowing the images to be compared and indexed by these attributes.

Automatic category assignment, mentioned above, is just one example of the kind of functionality that this enables. Being able to compare images quantitatively also opens up the possibility to capture and represent the structure of the whole database. This is an attractive idea, since the user is often trying to impose structure when they set about organising their photo album. If the images in the collection have an intrinsic structure, it will probably be a useful place for the user to start. Searching and browsing can also be made more efficient, as the user can learn the structure in order to exploit or modify it.

The method of the current invention automatically discovers the structure of the image database by analysing the similarities of pairs of images. This structure can then be exploited in a number of ways, including representing it as a two-dimensional plot, which the user can navigate interactively.

A variety of methods are known from the literature, dealing with the projection of data from high-dimensional spaces into low dimensional spaces, whether purely for representation (e.g. Principal Component Analysis (PCA)) classification (e.g. Linear Discriminant Analysis (LDA)) or visualisation (e.g. Laplacian Eigenmap, MultiDimensional Scaling (MDS), Locality Preserving Projection (LPP) and Self-Organising Map (SOM)). In the current context, algorithms that take a matrix of pair-wise comparisons as input are of particular interest. With many features, the numerical data cannot be interpreted simply as points in Cartesian space - it will usually only be appropriate to make comparisons using specific distance measures. Thus algorithms that operate directly on vector data are less useful for our purpose. The similarity-based techniques include MDS, SOMs and Laplacian Eigenmaps. These all create low-dimensional projections of the data, which best reflect the respective similarity measurements (where "best" is determined by some cost function).

Rising (US 6,721,759) describes a process for a hierarchical MDS database for images. This is based on measuring the similarity of a set of images using a feature detector, together with methods to query and update the structure. To construct the representation, MDS is performed at the top level, on a subset of the images, called control points. These points are chosen so as to approximate the convex hull of the data points - i.e., to represent fully the variations present in the images. The remaining points are initialised with positions relative to the control points and the whole set is split into multiple "nodes", each of which represents a subset. MDS is then carried out on each node, to refine the arrangement of the images within it. The method exploits the efficiency aspects of the hierarchical tree to reduce the computational burden of calculating MDS, which is an iterative optimisation algorithm.

The method of Trepess and Thorpe (EP 1 426 882) uses a SOM to create a mapped representation of the data. A hierarchical clustering is then constructed, to facilitate navigation and display. The clusters can be distinguished by various characterising information (labels), which are automatically derived from the clustered structure. The application is primarily to text documents, but the method itself is general. In one sense it mirrors the work of Rising: that method clusters the data at each level and then performs a mapping, whereas Trepess and Thorpe compute the mapping first (globally) and then use it to construct a hierarchy.

Jain and Santini (US 6,121,969) present a method to visualise the result of a query in a database of images. They display results in a three-dimensional space, whose axes are arbitrarily selected from a set of N dimensions. These correspond to the various measures of similarity between the query image and the database images. Visual navigation by moving through the space is proposed, giving the user a kinetic, as well as a visual, experience. This method differs from the two previous examples because instead of trying to optimally capture the similarity structure of a collection of images, it instead represents the similarity of the collection to a query image chosen by the user. The multiple dimensions arise from the multiple measures of this similarity, rather than from the multiple mutual similarities of the images.

As will be seen shortly, one of the key ideas behind the current invention is that rank structure, rather than similarity structure, is the important quality to preserve when representing and organising an image database. The use of rank to guide clustering has been mentioned fleetingly in the literature, for example by Novak et al. (J. Novak, P. Raghavan and A. Tomkins, "Anti-aliasing on the web", Proc. International World Wide Web Conference, pages 30-39, 2004) and Fang, (F. M. Fang, "An Analytical Study on Image Databases", Master's Thesis, MIT, June 1997). Both of these works define mutual rank of objects i and j as the sum of the rank of i, with respect to j and the rank of j, with respect to i.

The full potential of this type of measurement has, however, not been exploited. In particular, the aforementioned works only consider clustering and then only process each pair-wise mutual rank comparison in isolation, making decisions in a local, "greedy" fashion. The use of novel global rank-based measurements to guide a representation turns out to be a powerful tool to reveal structure.

Each of the prior art methods has drawbacks that are addressed by the current invention:

Simple browsing methods neither take advantage of the structure of the image collection nor represent it well.

Methods based on categorisation may partly solve this. They begin to make use of the feature-information available, but are inflexible due to the assignment of discrete, often exclusive class-labels. Reliable automatic classification is also notoriously difficult to achieve.

The more complex methods can take into account and represent similarity, but, so far, only capture absolute comparisons. The present method will capture relative relationships between images in the context of the overall collection.

Also absent from the prior art is the idea of computing and embedding in the representation a joint measure of both the temporal and visual similarity. Integrating time and appearance in this way gives advantageous properties to the visualisation, including making it easier for the user to interpret the resulting arrangement.

Aspects of the invention are set out in the claims. The invention is concerned with data items, by processing signals corresponding to data items, using an apparatus. The invention is primarily concerned with images. Further details of applications of the invention can be found in co-pending application our reference J47607EP.

One aspect of the invention is that relative relationships, and not absolute measures of similarity, are the important qualities to preserve when compactly representing the structure of an image collection. It therefore defines the mutual-rank matrix as the appropriate way to encode the structure of the data in a form that can be mathematically analysed. The entries in this matrix represent comparisons of pairs of images, in the context of the wider collection. The mathematical analysis can consist of grouping (clustering) images based on this information, or projecting the information into a compact representation that retains the most important aspects of the structure.

A second, related aspect is that this structure is most effectively captured when the mutual rank measurements are considered in aggregate, rather than in isolation. That is, when the processing takes a global, rather than a local (pair-wise) view of mutual rank.

A third aspect is that both temporal and visual information are equally useful in determining the context of images in the collection. This means that time is not treated as a separate or independent quantity in measuring the comparisons. The resulting clusters or visual representations are therefore formed in a space that can jointly represent visual similarity and proximity in time.

Embodiments of the invention will be described with reference to the accompanying drawings of which:

Fig. 1 is a flow diagram of a first embodiment;
Fig. 2 is flow diagram of a second embodiment;
Fig. 3 is a flow diagram of a third embodiment;
Fig. 4 shows a browsing apparatus.

A common method, in the context of an image retrieval task, is to present a ranked list of results, ordered by their similarity (in some sense), to the query. This captures well the relationships of the images in the database to the query image. The idea is that, hopefully, the user will find images of interest near the top of the ranked list, with irrelevant images pushed to the bottom. The current invention extends this idea in an attempt to capture and visualise all the inter-relationships amongst images in the database.

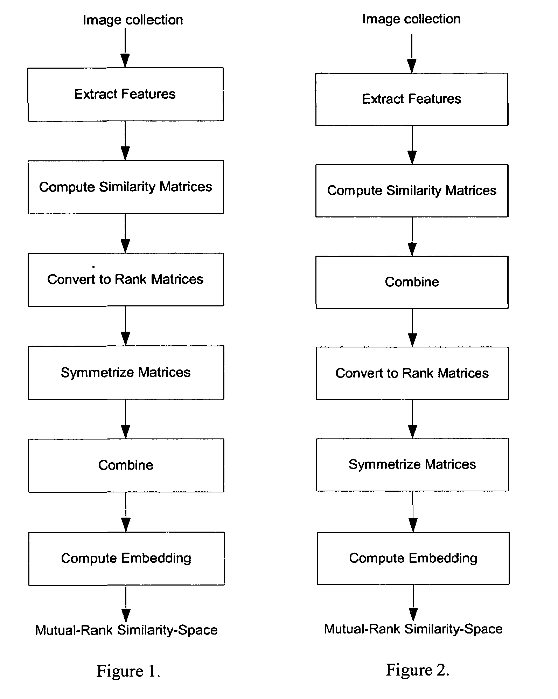

One embodiment of the method is a system that analyses images, compares their features, generates a set of mutual rank matrices, combines these and computes a mapped representation by solving an eigenvalue problem. This process is illustrated in the flowchart of Fig. 1.

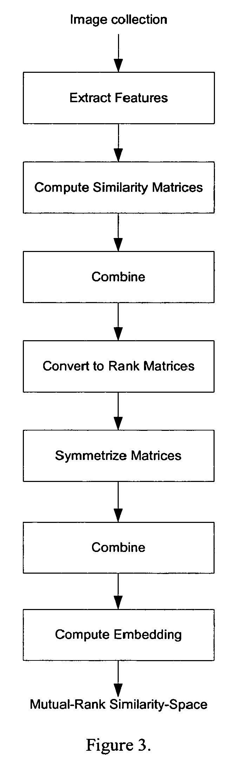

Another embodiment is shown in Fig. 2. Here, the combination step, which was carried out on the mutual rank matrices, in the first embodiment, is now carried out on the feature similarities. Fig. 3 shows a third embodiment where some combination is carried out at the early stage and the remainder carried out at the later stage. The choice of when to fuse the data from the various features is independent of the inventive idea. Rather it is a detail of the specific implementation. As will be apparent to one skilled in the art, the choice could be determined by factors such as complexity, the number of features (dimensionality) and their degree of independence. In the remainder of this description, we focus on the sequence shown in Fig. 1, without loss of generality.

The first step in such a system is to extract some descriptive features from the image and any associated metadata. The features may be, for example MPEG-7 visual descriptors, describing colour, texture and structure properties or any other visual attributes of the image. Time is the most important element of metadata, but other information, whether user-supplied or automatically generated can be incorporated. The only restriction on the descriptive features is that they allow comparison of one image with another, to yield a similarity value. Preferably, however, the features also capture some humanly meaningful qualities of the image content.

The second step is to perform cross matching of images, using the descriptive features. This yields, for each feature, $F$, a matrix of pair-wise similarities $S_F$. Each entry $S_F(i,j)$ is the similarity between an image, $i$, and an image, $j$, for the feature, $F$, in question. The matrices are therefore symmetric. All the images may be included in the cross matching or a subset. For example, the images may be clustered beforehand and just one image from each cluster processed, to reduce complexity and redundancy. This can be achieved with any of a number of prior art algorithms, for example, k-Nearest Neighbours, agglomerative merging or others.

The third step is to convert the similarity matrix $S_F$ into a rank matrix $R_F$. Each column is processed independently, replacing the similarity values with some rank ordinal values. In other words, for each $i$, the greatest similarity, $S_F(i,j)$, is replaced with, for example, $N$ (where $N$ is the number of images in the set), the second greatest is replaced with, $N - 1$, the third with $N - 2$ and so on. After this step, the matrix is no longer symmetric, since the rank of image $i$ with respect to $j$ is not the same as the rank of $j$ with respect to $i$. A side effect of this step is that we have pre-computed the retrieval result for querying any of the images. Note that this is not the only way to preserve the rank ordinal information. In general, this step can be viewed as a data-dependent, nonlinear, monotonic transformation of the similarities. Any such transformation can be seen to be within the scope of the current invention.

Further processing of the rank matrices is advantageous, although not necessary. For example, a threshold can be applied to remove spurious information - for many features, rank values beyond some cut-off point become meaningless: the images are simply "dissimilar" and retaining decreasing rank values is pointless. Time is one feature for which this is not the case, however. Time differences and ranks are consistent over all images, so the rank matrix for this feature is typically not thresholded.

The fourth step is, for each feature, to symmetrize the rank matrix. Any linear or nonlinear, algebraic or statistical function operating on the rank matrix can be used for this purpose. In one embodiment, the rank matrix is added to its transpose, giving an embodiment of a mutual rank matrix:

$$M_F = R_F + R_F^T$$

In this matrix, each entry encodes the relative similarity between images $i$ and $j$, given the broader context of the image collection. Note that the $M_F$ are symmetric. Another example of an appropriate symmetrization is simply choosing the maximum:

$$M_F(i,j) = \max\{R_F(i,j), R_F(j,i)\}$$

The fifth step is to combine the matrices $M_F$ into a single global matrix, $M$, of mutual-rank scores. There are many possible methods to accomplish this. In one embodiment, the $M_F$ are weighted and summed. The system may include some means to determine the weights, or they may be fixed in the design. The same wide variety of combination methods is possible when the features are to be combined at the earlier stage in the system (discussed earlier and illustrated by Figs. 2 and 3).

At this stage, the matrix $M$, which is a rich source of information about the structure of the database, can be analysed by a number of prior art algorithms for clustering and/or representation. For instance, pairs of images where there is a low mutual rank may be iteratively merged in an agglomerative clustering process.

More usefully, the matrix, $M$, can be analysed in a "global" fashion, so as to consider several (or potentially, all) of the mutual rank measurements concurrently. This reduces the sensitivity of the representation to noise in the individual measurements (matrix entries) and better captures the bulk properties of the data. Spectral clustering methods, known from the literature, are one example of this type of processing, but it will be clear to a skilled practitioner that any other non-local method is appropriate.

In a preferred embodiment, the mutual rank matrix is embedded in a low-dimensional space by the Laplacian Eigenmap method. The dimensionality is preferably two for visualisation purposes, but may be more or less. Alternatively, any number of dimensions may be used for clustering. Other methods are possible to perform the embedding. The Laplacian Eigenmap method seeks to embed the images as points in a space, so that the distances in the space correspond to the entries in $M$. That is, image pairs with large values of mutual rank are close to one another, while images with small values of mutual rank are far apart.

Achieving this leads to the following equation, which is an eigenvalue problem:

$$(D - M)x = \lambda Dx$$

where $D$ is a diagonal matrix, formed by summing the rows of $M$ :

$$D(i,i) = \sum_j M(i,j)$$

The solution of the equation gives rise to $N$ eigenvectors, $x$, which are the components of the images in a mutual-rank similarity space. The importance of each vector (dimension) in capturing the structure of the collection is indicated by the corresponding eigenvalue. This allows selection of the few most important dimensions for visualisation, navigation and clustering.

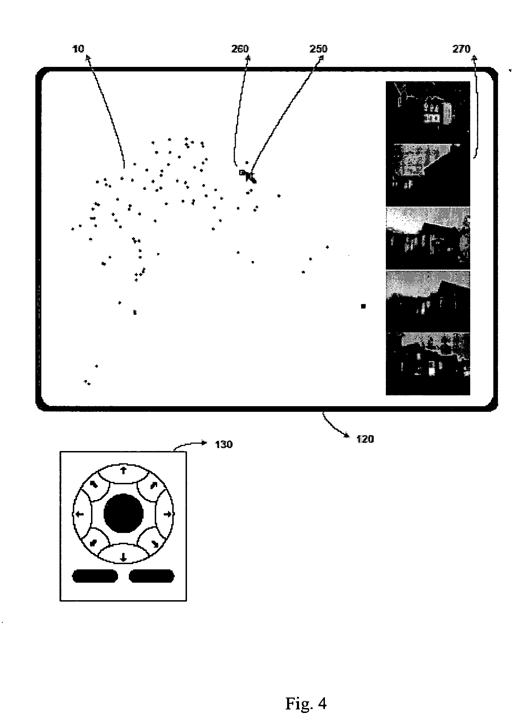

An illustration of the mapped image of a set of data items in 2-dimensional space derived using the method described above is shown in Fig. 4. More specifically, Fig. 4 shows a symbolic representation space on a display 120 where symbols (points or dots) correspond to data items, which here are images.

The arrangement of the symbols in the display (ie relative location and distances between symbols) reflects the similarity of the corresponding data items, based on one or more of characteristics of the data items, such as average colour.

A user can use a pointing device 130 to move a cursor 250 through the representation space 10. Depending on the location of the cursor, one or more images (thumbnails) 270 are displayed based on proximity of the respective symbol(s) 260 to the cursor. Further details of this and related methods and apparatus are described in our co-pending application entitled "Method and apparatus for accessing data using a symbolic representation space", file reference J47607EP, incorporated herein by reference.

Modifications and alternatives are discussed below.

It is possible to select a subset of the images when computing the mutual rank matrix. This reduces the size of the matrix and reduces computational burden. It will then be desired to determine locations in the output space of images that were not present in the initial subset. These may be the remainder of a larger collection or new images as they are added. According to the embodiment described above, it would be necessary to add an extra row and column to the mutual rank matrix as well as modifying existing entries, because the relative ranks of images will change when new images are present. The mapping would then be fully recomputed. However, it is possible to approximate this procedure, without modifying the locations of existing images in the output space. Bengio et al. (Y. Bengio, P. Vincent, J. -F. Paiement, O. Delalleau, M. Ouimet, and N. Le Roux, "Spectral Clustering and Kernel PCA are Learning Eigenfunctions", Technical Report 1239, Département d'Informatique et Recherche Opérationnelle, Centre de Recherches Mathématiques, Université de Montréal) give such a method for adding additional points to a Laplacian Eigenmap, projecting the new data onto the dimensions given by the original decomposition. This would facilitate the efficient implementation of a sub-sampled mutual-rank similarity space.

Secondly, the structure of the mathematical framework is such that it is easy to imagine incorporating additional information into the representation. For example, user annotation or other label information can be used to create different representations (via, e.g., LDA or Generalized Discriminant Analysis (GDA)). These would better represent the structure and relationships between and within labelled classes. They might also be used to suggest class assignments to new images as they are added to the database. The modification is only to the mathematical analysis - the mutual rank matrix construction remains the same. The output (embedding) of the modified system would contain combined information about the visual and temporal relationships between the images, as well as their class attributes.

Any collection of images or videos (trivially via key-frames, or otherwise), which a user might wish to navigate, is susceptible to the method. Equally, the database records/data items may not pertain to images and visual similarity measurement but any other domain, such as audio clips and corresponding similarity measures. For example, text documents may be processed, given appropriate measures of similarity from which to begin, although there are already specialised techniques in this area, such as Latent Semantic Indexing (LSI).

In this specification, the term "image" is used to describe an image unit, including after processing, such as filtering, changing resolution, upsampling, downsampling, but the term also applies to other similar terminology such as frame, field, picture, or sub-units or regions of an image, frame etc. The terms pixels and blocks or groups of pixels may be used interchangeably where appropriate. In the specification, the term image means a whole image or a region of an image, except where apparent from the context. Similarly, a region of an image can mean the whole image. An image includes a frame or a field, and relates to a still image or an image in a sequence of images such as a film or video, or in a related group of images.

Images may be grayscale or colour images, or another type of multispectral image, for example, IR, UV or other electromagnetic image, or an acoustic image etc.

The term "selecting means" can mean, for example, a device controlled by a user for selection, such as a controller including navigation and selection buttons, and/or the representation of the controller on a display, such as by a pointer or cursor.

The invention is preferably implemented by processing data items represented in electronic form and by processing electrical signals using a suitable apparatus. The invention can be implemented for example in a computer system, with suitable software and/or hardware modifications. For example, the invention can be implemented using a computer or similar having control or processing means such as a processor or control device, data storage means, including image storage means, such as memory, magnetic storage, CD, DVD etc, data output means such as a display or monitor or printer, data input means such as a keyboard, and image input means such as a scanner, or any combination of such components together with additional components. Aspects of the invention can be provided in software and/or hardware form, or in an application-specific apparatus or application-specific modules can be provided, such as chips. Components of a system in an apparatus according to an embodiment of the invention may be provided remotely from other components, for example, over the internet.

## Claims

1. A method of representing a group of data items comprising, for each of a plurality of data items in the group, determining the similarity between said data item and each of a plurality of other data items in the group, and assigning a rank to each pair on the basis of similarity, wherein the ranked similarity values for each of said plurality of data items are associated to reflect the overall relative similarities of data items in the group.

2. A method of representing a group of data items based on overall ranked relative similarity amongst data items in the group.

3. The method of claim 2 comprising determining ranked relative similarity of data items in the group by determining similarity between a data item and a plurality of other data items and determining similarity between each of at least two additional data items and a plurality of other data items, ranking the similarity values, and using the overall ranked similarity values based on similarity to said at least two data items.

4. The method of any preceding claim wherein the ranked similarity values are arranged in an array reflecting the overall relative similarities of data items in the group.

5. The method of any preceding claim comprising deriving a matrix array wherein entries in the matrix correspond to ranked similarity values between data items.

6. The method of claim 5 wherein the matrix entry at the ith column and jth row corresponds to the ranked similarity value of the ith and jth data items.

7. The method of any preceding claim comprising deriving a matrix array wherein the entry in the ith column and the jth row corresponds to the similarity between the ith and jth data items.

8. The method of claim 7 comprising ranking the similarity values in rows or in columns.

9. The method of any of claims 5, 6 or 8 comprising symmetrizing the rank matrix.

10. The method of any of claims 5 to 9 comprising thresholding the matrix entries.

11. The method of any preceding claim wherein similarity of data items is determined on the basis of characteristics of data items.

12. The method of claim 11 wherein the characteristics of data items comprise metadata, such as time or user-assigned data and/or intrinsic characteristics, such as colour, texture etc.

13. The method of any preceding claim comprising determining similarities for each of a plurality of characteristics.

14. The method of claim 13 comprising using a combination of similarity of a plurality of characteristics.

15. The method of claim 13 or claim 14 using time and visual characteristics.

16. The method of any of claims 13 to 15 comprising deriving and combining rank matrices for a plurality of characteristics.

17. The method of any of claims 13 to 15 comprising deriving and combining similarity matrices for a plurality of characteristics.

18. The method of any preceding claim comprising pre-processing the data items, for example, by selecting a subset, clustering, or subsampling data items.

19. A method of representing data items comprising determining and ranking similarity amongst data items, comprising further processing using relative ranks of three or more data items together.

20. The method of any preceding claim wherein the data items comprise images.

21. The method of any preceding claim comprising further processing such as embedding, visualisation, clustering of data items.

22. The method of claim 21 comprising mapping data items to points in space based on the overall ranked similarity values.

23. The method of claim 22 comprising mapping data items to a low-dimensional space, for example, lower than the representational dimension of the data items.

24. The method of claim 23 comprising mapping to a two-dimensional space.

25. The method of any of claims 23 to 26 wherein distances between mapped data items in the space correspond to relative similarity of data items.

26. The method of any of claims 22 to 25 comprising using the Laplacian Eigenmap technique.

27. The method of any preceding claim comprising displaying symbols corresponding to data items.

28. The method of claim 27 wherein the relative arrangement and/or location of symbols in the display corresponds to relative similarity of respective data items.

29. The method of any preceding claim comprising adding or projecting new data items into the overall representation.

30. A method of representing data items comprising determining similarity between data items based on time and visual characteristics.

31. Use of the method of any preceding claim, for example, in embedding, visualisation, clustering, searching, browsing.

32. Control device programmed to execute the method of any preceding claim.

33. Apparatus adapted to execute the method of any of claims 1 to 31.

34. Apparatus comprising a processor arranged to execute the method of any of claims 1 to 31, display means, selecting means and storage means storing data items.

35. Computer program for executing the method of any of claims 1 to 31 or a computer-readable storage medium storing such a computer program.

Image collection

Image collection

Extract Features

Extract Features

Compute Similarity Matrices

Compute Similarity Matrices

Convert to Rank Matrices

Combine

Symmetrize Matrices

Convert to Rank Matrices

Combine

Symmetrize Matrices

Compute Embedding

Compute Embedding

Mutual-Rank Similarity-Space

Mutual-Rank Similarity-Space

Figure 1.

Figure 2.

Image collection

↓

| Extract Features |

↓

| Compute Similarity Matrices |

↓

| Combine |

↓

| Convert to Rank Matrices |

↓

| Symmetrize Matrices |

↓

| Combine |

↓

| Compute Embedding |

↓

Mutual-Rank Similarity-Space

Figure 3.

Fig. 4

**European Patent Office**

**EUROPEAN SEARCH REPORT**

Application Number

EP 05 25 5032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 240 423 B1 (HIRATA KYOJI) 29 May 2001 (2001-05-29) * column 8, line 55 - column 9, line 25 * ----- | 1-21, 27-35 | G06K9/68 G06F17/30 |
| X | US 2002/097914 A1 (YAUNG ALAN TSU-I) 25 July 2002 (2002-07-25)  * paragraph [0043] - paragraph [0046] * * figures 6,7 * ----- | 1-8, 10-22, 27-35 | |
| A | US 5 915 250 A (JAIN ET AL) 22 June 1999 (1999-06-22) * the whole document * ----- | 1-35 | |
| A | Y. BENGIO ET AL.: "Spectral dimensionality reduction" CIRANO SCIENTIFIC SERIES, 1 May 2004 (2004-05-01), XP002359881 Montreal, Canada Retrieved from the Internet: URL:http://econpapers.repec.org/paper/circ irwor/2004s-27.htm> [retrieved on 2005-12-15] * the whole document * ----- | 1-35 | TECHNICAL FIELDS SEARCHED (IPC) G06K G06F |
| A | HELFMAN J: "Dotplot patterns: a literal look at pattern languages" THEORY AND PRACTICE OF OBJECT SYSTEMS, WILEY, NEW YORK, NY,, US, vol. 2, no. 1, 1996, pages 31-41, XP002265507 ISSN: 1074-3227 * the whole document * ----- | 1-35 | |

The present search report has been drawn up for all claims

| Place of search | Date of completion of the search | Examiner |
|---|---|---|
| The Hague | 19 December 2005 | Grigorescu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 25 5032

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2005

| Patent document cited in search report | | Publication date | Patent family member(s) | | Publication date |
|---|---|---|---|---|---|
| US 6240423 | B1 | 29-05-2001 | JP | 3522146 B2 | 26-04-2004 |
| | | | JP | 11316846 A | 16-11-1999 |
| US 2002097914 | A1 | 25-07-2002 | AU | 1577400 A | 26-06-2000 |
| | | | CN | 1329730 A | 02-01-2002 |
| | | | EP | 1141865 A1 | 10-10-2001 |
| | | | WO | 0034893 A1 | 15-06-2000 |
| | | | JP | 2002532786 T | 02-10-2002 |
| | | | PL | 347828 A1 | 22-04-2002 |
| US 5915250 | A | 22-06-1999 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6028603 A, Wang
- US 20020140746 A, Gargi
- US 20030123737 A, Mojsilovic
- US 20020075322 A, Rosenzweig
- US 20030086012 A, Stavely

- US 6538698 B, Anderson
- US 6721759 B, Rising
- EP 1426882 A, Trepess and Thorpe
- US 6121969 A, Jain and Santini

**Non-patent literature cited in the description**

- **J. NOVAK ; P. RAGHAVAN ; A. TOMKINS.** Anti-aliasing on the web. *Proc. International World Wide Web Conference,* 2004, 30-39
- **F. M. FANG.** An Analytical Study on Image Databases. *Master's Thesis, MIT,* June 1997

- Spectral Clustering and Kernel PCA are Learning Eigenfunctions. **Y. BENGIO ; P. VINCENT ; J. -F. PAIEMENT ; O. DELALLEAU ; M. OUIMET ; N. LE ROUX.** Technical Report 1239. Département d'Informatique et Recherche Opérationnelle, Centre de Recherches Mathématiques